**Europäisches Patentamt**

(19) **European Patent Office**

**Office européen des brevets**

(11) Publication number: **0 125 710**
**A2**

(12) # EUROPEAN PATENT APPLICATION

(21) Application number: **84200472.3**

(22) Date of filing: **04.04.84**

(51) Int. Cl.³: **C 08 F 299/06**
**G 02 B 1/10, B 29 D 11/00**
**C 08 F 283/00**

(30) Priority: **11.04.83 US 483479**

(43) Date of publication of application:
**21.11.84 Bulletin 84/47**

(84) Designated Contracting States:
**AT BE DE FR GB IT NL SE**

(71) Applicant: **VALTEC**
**99 Hartwell Street**
**West Boylston Massachusetts 01583(US)**

(72) Inventor: **Carlson, Nancy Woolsey**
**c/o INT. OCTROOIBUREAU B.V. Prof. Holstlaan 6**
**NL-5656 AA Eindhoven(NL)**

(72) Inventor: **Sciaraffa, Patrick Louis**
**c/o INT. OCTROOIBUREAU B.V. Prof. Holstlaan 6**
**NL-5656 AA Eindhoven(NL)**

(74) Representative: **Auwerda, Cornelis Petrus et al,**
**INTERNATIONAAL OCTROOIBUREAU B.V. Prof.**
**Holstlaan 6**
**NL-5656 AA Eindhoven(NL)**

(54) U.V. curable coating for optical fibers.

(57) A rapid U.V. curing composition particularly adapted for forming a protective coating on glass optical fibers comprising a solvent-free mixture of an acrylated aromatic urethane oligomer, a mixture of a U.V. curable mono-, di-, and/or trifunctional monomer, a photoinitiator such as an acetophenone or a derivative thereof and an amine accelerator.

EP 0 125 710 A2

U.V. curable coating for optical fibers.

This invention relates to a novel U.V. curable coating composition particularly adapted for producing a protective polymer coating on optical fibers and to optical fibers provided with such a coating.

Because of their high information carrying capacity and relative freedom from external interference, optical fibers have been finding greatly increased use in the last frew years particularly in the communications field. For use in the communications field the optical fibers that are employed are generally made of glass. However, glass fiber are inherently fragile and chemically attacked by water vapor and therefore are easily subject to breakage and are difficult to handle.

In order to improve the handling characteristics and to make breaking of the glass less likely, various methods of reinforcement for the fibers have been considered.

Among the methods now commonly employed is the use of a protective polymer coating.

The polymer coating may be applied by extrusion, by solvent coating or by coating with a U.V. curable, solvent-free, polymer composition.

There are certain disadvantages in the extrusion method including the inability to form a coating of a thickness of less than 254 /um (10 mils) and the need for the use of thermoplastic materials of a relatively high modulus which causes stresses and transmission losses in the fibers.

The solvent coating method requires the use of high temperatures in order to eliminate the solvent from the coating which high temperatures may very readily damage the fibers and the need for expensive equipment to prevent pollution of the environment by the solvent. Further the solvent coating method is time consuming because of the need to coat the fibers many times in order to provide the desired coating thickness.

Coating with a U.V. curable polymer composition is free of the diadvantages inherent in the use of the solvent coating or extrusion methods and is therefore preferred.

PHA 21.155                                   2                        23.02.1984 0125710

U.V. curable polymer coating compositions for optical fibers and methods of applying such coatings are well known in the art as is shown for example by Ketley et al, U.S. Patent No. 4,125,644 and Vazirani, U.S. Patent No. 4,099,837.

While the U.V. curable polymer compositions that are now in use offer a number of advantages including rapid cure rates, elimination of solvents and the ability to be easily and closely tailored for desired properties, it has been found that the curing rates of these compositions are not so sufficiently rapid to match the rate of drawing of the fibers through the coating compositions and as a result attempts to sbustantially increase the draw rate have resulted in the formation of uncured or poorly cured coatings. It is therefore desirable to provide a more rapidly curable U.V. curable polymer composition for coating optical fibers.

Although the coating compositions are employed to provide very thin coatings (of less than 254 /um (10 mil) the huge quantity of fiber optices being produced (thousands of kms annually) results in the consumption of large quantities of the coating compositions and thus the cost of the coating compositions is an important factor in the cost of producing the optical fibers. It is therefore also desirable that the cost of employing the coating compositions be kept as low as possible.

A principal object of this invention is to provide a U.V. curable polymer coating composition of an increased curing rate particularly adapted for use on optical fibers.

Another object of this invention is to provide an U.V. curable polymer coating composition that in addition to an increased curing rate reduces the costs of providing a protective coating for optical fibers.

These and other objects of the invention will be apparent from the description that follows.

According to the invention, the applicants have prepared a novel U.V. curable polymer coating composition particularly adapted for use in providing a protective polymer coating for optical fibers particularly those made of glass.

The novel coating composition of the invention comprises a solvent-free mixture of 10% to 95% by weight of an acrylated urethane oligomer of an average molecular weight of 1000-25,000, 4.0% to 90% by weight of at least one monofunctional, difunctional or trifunctional liquid monomer, each monomer being polymerizable by free radicals, 0.1% to 10% by weight of a photoinitiator and 0.5 to 5% by weight of an amine accelerator.

Although both acrylated aromatic and aliphatic urethane oligomers may be employed, acrylated aromatic urethane oligomers are preferred as the acrylated aromatic urethanes present better protection to the fibers against damage by the U.V. radiation. Preferably these oligomers are employed in a range of 55% to 85% by weight.

As examples of the acrylated urethane oligomers that may be employed are disclosed in U.S. Patent No. 4,303,696, for instance in examples 9,46, 55,56 and 70, and CMD6700, an acrylated aromatic urethane oligomer sold by the Celanese Corporation, having an average molecular weight of 1530.

Preferably the total amount of liquid monomers employed is 15% to 45% by weight.

Liquid monomers that may be employed include various mono- or multifunctional acrylates or methacrylates, vinyl or allyl terminated molecules, unsaturated alicyclics and mixtures thereof. Among specific examples of such monomers are ethoxyethyl acrylate, 2-ethylhexyl acrylate, phenoxyethyl acrylate, vinyl acrylate, tetrahydrofurfuryl acrylate, hydroxyethyl methacrylate, hexanediol diacrylate, tetramethylene glycol diacrylate, tetraethylene glycol diacrylate, trimethylolpropane triacrylate, pentaerythritol triacrylate, vinyl laurate, vinyl triethoxy silane and N-vinyl pyrrolidone.

Preferably the mixture of liquid monomers contains at least one di- or trifunctional acrylate as such comprositions exhibit superior curing rates.

The most useful range for the photoinitiator has been found to be 1.0% to 5% by weight. Specific examples of photoinitiators that may be employed include alpha-aromatic ketones, azo compounds, benzophenone and derivatives thereof, acetophenone and derivatives thereof such as 2,2-dimethoxy-2-phenoxy-acetophenone.

Preferably the coating composition contains from 3.0% to 5.0% by weight of the amine accelerator. Preferably the amines employed are tertiary amines such as dimethylethanolamine, methyldiethanolamine and N,N-dimethylaniline.

In addition such materials as are commonly employed in U.V. curable coating compositions such as flatting agents, slip agents,

wetting agents, adhesion promotors, pigments and stabilizers may also be included.

Generally, the U.V. curable coating composition is applied to the optical fibers by drawing the fibers through a bath containing the coating compositions held at a temperature of $25^{O}C$ to $75^{O}C$ at a rate of about 1 to 5 meters per second, controlling the amount of curable coating present on the optical fiber to a desired thickness, for example 50,8 to 76,2 /um (2 to 3 mils) and thensubjecting the coated fibers to U.V. radiation to cure and thereby harden the coating.

While the coating compositions of the invention may be applied directly to the optical fibers it is preferred that the optical fibers be first coated with a material that cures to a gel-like consistency in order to serve as a shock absorber. Examples of such coating compositions are DeSoto 950 x 030, 950 x 041 and 950 x 057, sold by DeSoto Chemical Company, Inc. and being acrylated urethane oligomers.

Not only do the U.V. curable coating compositions of the invention cure at a much more rapid rate than that of the most rapid curing commerical coating compositions now available, but they cure to a hard, scratch-resistant, flexible coating the physical properties of which are equal to or better than that of the commerically available U.V. curable coating compositions both at room temperatures and even when subjected to cycling from $-60^{O}C$ to $+80^{O}C$.

The invention will now be described in greater detail with reference to the following examples:

### Example I

Preparation of Coating Composition (VAL-REZ 120).

An ultraviolet (U.V.) curable coating composition was prepared by mixing together the following composition in parts by weight:

| | |
|---|---|
| 70 parts | Celanese CMD 6700 - An aromatic urethane acrylate supplied by the Celanese Corporation |
| 22 parts | trimethylolpropane triacrylate |
| 4 parts | hexandiol diacrylate |
| 4 parts | N-vinyl-2-pyrrolidone |
| 4 parts | Irgacure 651 (2,2-dimethoxy-2-phenyl-acetophenone) |
| 4 parts | methyldiethanolamine and |
| 2 parts | DC 193 - a silicone glycol copolymer supplied by the Dow Corning Corporation |

## Example II

A glass optical fiber of a thickness of about 76,2 /um inch and covered with a 50,8 /um coating of DeSoto 950 x 030 was drawn, at the rate of about 1 to 5 meters per second, through a bath consisting of the coating composition of Example I. The temperature of the coating composition was held at slightly above room temperature. The thickness of the resultant wet coating was kept at about 50,8 /um. The thus coated optical fiber was then subject to U.V. radiation at a radiant energy level of 7700 u w/cm$^2$ employing a medium pressure mercury vapor lamp of 200 watts per inch for about 4 to 5 seconds.

As a result the wet coating was fully cured to a hard, flexible, scratch-resistant coating tightly adhering to the optical fiber.

A coating applied in a similar fashion except for the substitution of DeSoto 042 a U.V. curable coating composition of the DeSoto Chemical Company required a curing time of about 10 seconds and being an acrylated urethane oligomer.

In order to compare their physical properties 76.2 /um thick films of VAL-REZ 120 and DeSoto 042 were cast and cured to hardness by means of the U.V. radiation system as described in Example .

The values of physical properties of the cured films are shown in the following Table.

### Table

| Property | VAL-REZ 120 | DE SOTO 042 |
|---|---|---|
| Tensile strength, kg/cm$^2$ | 102.648 | 97.235 |
| Durometer, Shore D | 62-60 | 62-58 |
| Modulus, kg/cm$^2$ | | |
| 73$^{\circ}$C | 4.479 | 4.245 |
| 0$^{\circ}$C | 6.306 | 5.928 |
| -25$^{\circ}$C | 4.909 | 8.037 |
| -50$^{\circ}$C | 4.580 | 8.476 |
| Water Vapor Permeability (300 Hrs) % Gain 27$^{\circ}$C-95RH% | 1.17 | 3.31 |

**0125710**

As shown by the results the films prepared from the cured VAL-REZ 120 were found to exhibit a modulus that was significantly more independent of temperature changes and substantially less permeable to water vapor.

It will be apparent that various modifications may be made in the present invention without departing from its scope as defined in the following claims.

1.      A U.V. curable coating composition particularly adapted for providing a protective polymer coating on optical fibers, said coating composition comprising a solvent-free mixture of 10% to 95% by weight of an acrylated urethane oligomer of an average molecular weight of 1000-25,000, 4.0% to 90.0% by weight of at least one monofunctional, difunctional or trifunctional liquid monomer, each monomer being polymerizable by free radicals, 1% to 10% by weight of a photoinitiator and 0.5% to 5% by weight of an amine accelerator.

2.      The U.V. curable coating composition of claim 1 wherein the acrylated urethane oligomer is an acrylated aromatic urethane.

3.      The U.V. curable coating of claim 2 wherein the solvent-free mixture comprises 55% to 85% by weight of the oligomer, 15% to 45% by weight of the mixture of liquid monomers, 1.0% to 5.0% by weight of the photoinitiator and 3.0% to 5.0% by weight of the amine accelerator.

4.      The U.V. curable coating composition of claim 3 wherein difunctional and a trifunctional acrylate are present.

5.      The U.V. curable coating of claim 4 wherein the photoinitiator is acetophenone or a derivative thereof.

6.      The U.V. curable coating of claim 5 wherein the photoinitiator is 2,2-dimethoxy-2-phenyl-acetophenone and the amine accelerator is methyldiethanolamine.

7.      The U.V. curable coating composition of claim 6 comprising in parts by weight:

| | |
|---|---|
| an acrylated aromatic urethane | – 70 parts |
| trimethylolpropane triacrylate | – 22 parts |
| hexandiol diacrylate | – 4 parts |
| N-vinyl-2-pyrrolidone | – 4 parts |
| 2,2-dimethoxy-2-phenyl-acetophenone | – 4 parts |
| methyldiethanolamine | – 4 parts |

8.      An optical fiber provided with a hard, flexible, scratch-resistant coating formed by the U.V. curing of the composition of claim 1.

9.      An optical fiber provided with a hard, flexible, scratch-resistant coating formed by the U.V. curing of the composition of claim 2.

10.       An optical fiber provided with a hard, flexible, scratch-resistant coating formed by the U.V. curing of the composition of claim 3.

11.       An optical fiber provided with a hard, flexible, scratch-resistant coating formed by the U.V. curing of the composition of claim 4.

12.       An optical fiber provided with a hard, flexible, scratch-resistant coating formed by the U.V. curing of the composition of claim 5.

13.       An optical fiber provided with a hard, flexible, scratch-resistant coating formed by the U.V. curing of the composition of claim 6.

14.       An optical fiber provided with a hard, flexible, scratch-resistant coating formed by the U.V. curing of the composition of claim 7.